# EUROPEAN PATENT SPECIFICATION

(11) **EP 4 420 897 B1**
(45) Date of publication and mention of the grant of the patent: **05.11.2025**
(21) Application number: 24156485.5
(22) Date of filing: 08.02.2024
(51) Int. Cl.: B60C 9/28, B60C 11/00, B60C 11/12

(54) **TIRE**
REIFEN
PNEUMATIQUE

(30) Priority: 22.02.2023 JP 2023026512
(43) Date of publication of application: 28.08.2024
(73) Proprietor: Sumitomo Rubber Industries, Ltd., Kobe-shi, Hyogo 651-0072 (JP)
(72) Inventor: KURIYAMA, Tomohisa, Kobe-shi, 651-0072 (JP); KIKUCHI, Hiroshi, Kobe-shi, 651-0072 (JP)
(74) Representative: Manitz Finsterwald Patent- und Rechtsanwaltspartnerschaft mbB

(56) References cited:
- JP-A- 2010 047 211
- JP-A- 2018 197 019
- US-A- 6 138 728
- US-A1- 2020 338 930

## Description

### BACKGROUND OF THE INVENTION

### Field of the Invention

The present invention relates to a tire. Specifically, the present invention relates to a tire that is mounted to a passenger car.

### Background Art

From the viewpoint of consideration for the environment, reduction of rolling resistance is required for tires that are mounted to vehicles. Therefore, studies have been made by, for example, decreasing the number of components included in a tire, decreasing the thicknesses of the components, using low heat generation materials as the materials forming the components, etc. (for example, Japanese Laid-Open Patent Publication No. 2021-120242).
JP 2018 197019 A discloses a tire comprising the features according to the preamble of claim 1. US 2020/0338930 A1 discloses a tire comprising features according to a related technology. US 6 138 728 A also discloses a tire comprising features according to a related technology. JP 2010 047211 A also discloses a tire comprising features according to a related technology.

An object of the present invention is to provide a tire that can achieve reduction of rolling resistance without decreasing grip performance on a wet road surface (hereinafter, referred to as WET performance).

### SUMMARY OF THE INVENTION

This object is satisfied by a tire comprising the features of claim 1.
The tire includes a tread configured to come into contact with a road surface, and a belt located radially inward of the tread. The tread has a plurality of circumferential main grooves continuously extending in a circumferential direction. The plurality of circumferential main grooves divide the tread into at least three land portions aligned in an axial direction. Among the plurality of circumferential main grooves, a circumferential main groove located on each outermost side in the axial direction is a shoulder circumferential main groove. Among said at least three land portions, a land portion located on each outermost side in the axial direction is a shoulder land portion. The belt includes an inner layer and an outer layer located radially outward of the inner layer. Each end of the outer layer is located axially inward of an end of the inner layer. A circumferential sipe is formed on the shoulder land portion so as to continuously extend in the circumferential direction. A groove width of the circumferential sipe is smaller than a groove width of the shoulder circumferential main groove. The circumferential sipe is located between the shoulder circumferential main groove and the end of the outer layer in the axial direction. A ratio of a distance in the axial direction from the shoulder circumferential main groove to the circumferential sipe to a distance in the axial direction from the shoulder circumferential main groove to the end of the outer layer is not less than 10% and not greater than 95%.

According to the present invention, a tire that can achieve reduction of rolling resistance without decreasing WET performance is obtained.

### BRIEF DESCRIPTION OF THE DRAWINGS

FIG. 1 is a cross-sectional view showing a part of a tire according to one embodiment of the present invention;
FIG. 2 illustrates grooves provided on a tread;
FIG. 3 is a cross-sectional view showing a shoulder land portion;
FIG. 4 is a cross-sectional view showing a circumferential sipe;
FIG. 5 is a cross-sectional view showing a part of a tread portion; and
FIG. 6 is a cross-sectional view showing a modification of the circumferential sipe.

### DETAILED DESCRIPTION

Hereinafter, the present invention will be described in detail based on preferred embodiments with appropriate reference to the drawings.

A tire of the present invention is fitted on a rim. The inside of the tire is filled with air to adjust the internal pressure of the tire. The tire fitted on the rim is also referred to as tire-rim assembly. The tire-rim assembly includes the rim and the tire fitted on the rim.

In the present invention, a state where a tire is fitted on a standardized rim, the internal pressure of the tire is adjusted to a standardized internal pressure, and no load is applied to the tire is referred to as standardized state.

In the present invention, unless otherwise specified, the dimensions and angles of each component of the tire are measured in the standardized state.

The dimensions and angles of each component in a meridian cross-section of the tire, which cannot be measured in a state where the tire is fitted on the standardized rim, are measured in a cut plane of the tire obtained by cutting the tire along a plane including a rotation axis. In this measurement, the tire is set such that the distance between right and left beads is equal to the distance between the beads in the tire that is fitted on the standardized rim. The configuration of the tire that cannot be confirmed in a state where the tire is fitted on the standardized rim is confirmed in the above-described cut plane.

The standardized rim means a rim specified in a standard on which the tire is based. The "standard rim" in the JATMA standard, the "Design Rim" in the TRA standard, and the "Measuring Rim" in the ETRTO standard are standardized rims.

The standardized internal pressure means an internal pressure specified in the standard on which the tire is based. The "highest air pressure" in the JATMA standard, the "maximum value" recited in the "TIRE LOAD LIMITS AT VARIOUS COLD INFLATION PRESSURES" in the TRA standard, and the "INFLATION PRESSURE" in the ETRTO standard are standardized internal pressures.

The standardized load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are standardized loads.

In the present invention, a loss tangent (tan δ) of a component formed from a crosslinked rubber, of the components included in the tire, is measured according to the standards of JIS K6394. The measurement conditions are as follows.
Initial strain = 10%
Dynamic distortion = ±1%
Frequency = 10 Hz
Mode = stretch mode
Temperature = 30°C

In this measurement, a test piece (20 mm long × 4 mm wide × 1 mm thick) is sampled from the tire. The length direction of the test piece is caused to coincide with the circumferential direction of the tire. When a test piece cannot be sampled from the tire, a test piece is sampled from a sheet-shaped crosslinked rubber (hereinafter, also referred to as rubber sheet) obtained by pressurizing and heating a rubber composition, which is used for forming the component to be measured, at a temperature of 170°C for 12 minutes.

In the present invention, the loss tangent is represented as a loss tangent at 30°C.

In the present invention, a tread portion of the tire is a portion of the tire that comes into contact with a road surface. A bead portion is a portion of the tire that is fitted to a rim. A sidewall portion is a portion of the tire that extends between the tread portion and the bead portion. The tire includes a tread portion, a pair of bead portions, and a pair of sidewall portions as portions thereof.

A center portion of the tread portion is also referred to as crown portion. A portion of the tread portion at an end thereof is also referred to as shoulder portion.

### [Findings on Which Present Invention Is Based]

According to intensive studies by the present inventors, the following circumstances have become clear regarding the technology for reducing the rolling resistance of tires.

A tread includes a cap portion and a base portion. The cap portion has a tread surface which comes into contact with a road surface. Normally, for the cap portion, importance is placed on grip performance rather than on low heat generation properties. The base portion is located radially inward of the cap portion. For the base portion, a crosslinked rubber that has low heat generation properties is used.

If a crosslinked rubber for which low heat generation properties are taken into consideration is used for the cap portion, the rolling resistance of a tire can be reduced. However, grip performance on a wet road surface (hereinafter, referred to as WET performance) is decreased.

For tires, low rolling resistance and good WET performance are required. Establishment of a technology capable of achieving reduction of rolling resistance without decreasing WET performance is required.

At the tread of a tire, a ground-contact state and a non-ground-contact state are repeated. The tread surface is curved such that the crown portion bulges outward. In the tread that is in a non-ground-contact state, the land surface of each shoulder land portion is located radially inward of the land surface of a center land portion. When the tread comes into contact with a road surface, the tread is pressed against the road surface. This causes the tread to deform. The center land portion moves radially inward, and the ground-contact surface expands axially outward from the equator. Then, each shoulder land portion comes into contact with the ground. The tread in a ground-contact state becomes deformed such that the tread surface warps in the opposite direction. Compressive strain is generated in each shoulder land portion.

The inventors have conducted studies focusing on the compressive strain generated in each shoulder land portion. As a result, the inventors have found that if generation of compressive strain can be suppressed, rolling resistance can be reduced without decreasing WET performance, and thus have completed the invention described below.

### [Outline of Embodiments of Present Invention]

### [Configuration 1]

A tire according to one aspect of the present invention includes a tread configured to come into contact with a road surface, and a belt located radially inward of the tread, wherein: the tread has a plurality of circumferential main grooves continuously extending in a circumferential direction; the plurality of circumferential main grooves divide the tread into at least three land portions aligned in an axial direction; among the plurality of circumferential main grooves, a circumferential main groove located on each outermost side in the axial direction is a shoulder circumferential main groove; among said at least three land portions, a land portion located on each outermost side in the axial direction is a shoulder land portion; the belt includes an inner layer and an outer layer located radially outward of the inner layer; each end of the outer layer is located axially inward of an end of the inner layer; a circumferential sipe is formed on the shoulder land portion so as to continuously extend in the circumferential direction; a groove width of the circumferential sipe is smaller than a groove width of the shoulder circumferential main groove; the circumferential sipe is located between the shoulder circumferential main groove and the end of the outer layer in the axial direction; and a ratio of a distance in the axial direction from the shoulder circumferential main groove to the circumferential sipe to a distance in the axial direction from the shoulder circumferential main groove to the end of the outer layer is not less than 10% and not greater than 95%.

By forming the tire as described above, the tire can achieve reduction of rolling resistance without decreasing WET performance.

### [Configuration 2]

Preferably, in the tire according to [Configuration 1] described above, the groove width of the circumferential sipe is not less than 0.8 mm and less than 1.5 mm.

### [Configuration 3]

In the tire according to [Configuration 1] or [Configuration 2] described above, the tread includes a cap portion configured to come into contact with the road surface and a base portion located radially inward of the cap portion, and a loss tangent of the base portion at 30°C is lower than a loss tangent of the cap portion at 30°C.

### [Configuration 4]

Preferably, in the tire according to [Configuration 3] described above, a groove bottom of the circumferential sipe is located radially outward of a boundary between the cap portion and the base portion.

### [Configuration 5]

Preferably, in the tire according to [Configuration 4] described above, a ratio of a groove depth of the circumferential sipe to a thickness of the cap portion is not less than 40% and not greater than 95%.

### [Configuration 6]

In the tire according to any one of [Configuration 3] to [Configuration 5] described above, each end of the base portion is located axially inward of the end of the inner layer.

### [Configuration 7]

Preferably, in the tire according to [Configuration 6] described above, a ratio of a width in the axial direction of the base portion to a width in the axial direction of the outer layer is not less than 95% and not greater than 105%.

### [Configuration 8]

Preferably, in the tire according to any one of [Configuration 1] to [Configuration 7] described above, the circumferential sipe extends in a zigzag manner in each of a length direction and a depth direction thereof.

### [Details of Embodiments of Present Invention]

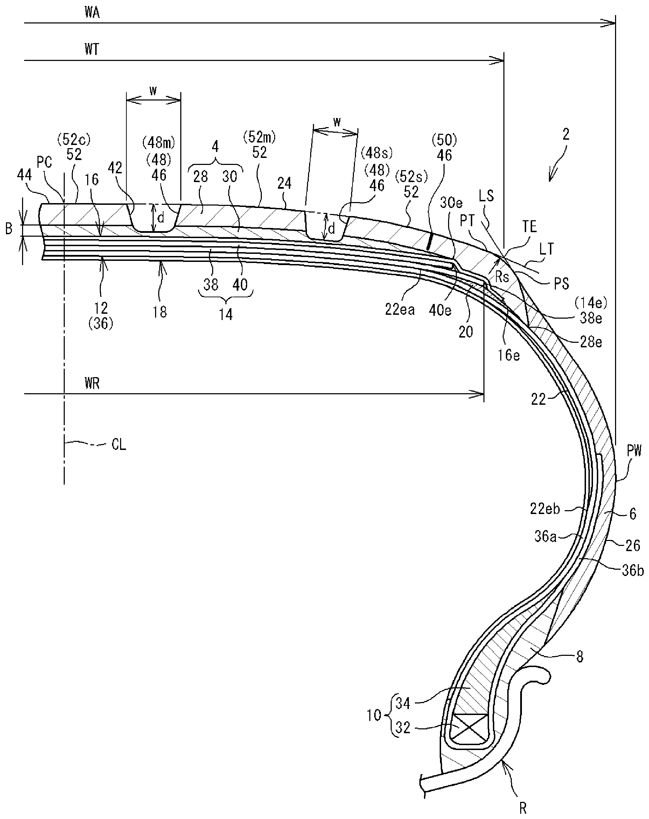

FIG. 1 shows a part of a tire 2 according to an embodiment of the present invention. The tire 2 is a pneumatic tire for a passenger car.

FIG. 1 shows a part of a cross-section (hereinafter, referred to as meridian cross-section) of the tire 2 taken along a plane including the rotation axis of the tire 2. In FIG. 1, the right-left direction is the axial direction of the tire 2, and the up-down direction is the radial direction of the tire 2. The direction perpendicular to the surface of the drawing sheet of FIG. 1 is the circumferential direction of the tire 2. An alternate long and short dash line CL represents the equator plane of the tire 2.

In FIG. 1, a position indicated by reference character PC is the point of intersection of the outer surface of the tire 2 and the equator plane CL. The point of intersection PC is also referred to as the equator of the tire 2. In the case where a groove is located on the equator plane CL, the equator PC is specified on the basis of a virtual outer surface obtained on the assumption that no groove is provided thereon. The equator PC is also the radially outer end of the tire 2.

In FIG. 1, a position indicated by reference character PW is an axially outer end of the tire 2. In the case where decorations such as patterns and letters are present on the outer surface of the tire 2, the outer end PW is specified on the basis of a virtual outer surface obtained on the assumption that the decorations are not present.

In FIG. 1, a length indicated by a double-headed arrow WA is the cross-sectional width (see JATMA or the like) of the tire 2. The cross-sectional width WA is the distance in the axial direction from a first outer end PW to a second outer end PW. The cross-sectional width WA is the maximum width of the tire 2, and each outer end PW is a position (hereinafter, referred to as maximum width position) at which the tire 2 has the maximum width WA. The cross-sectional width WA is specified in the tire 2 in the standardized state.

The tire 2 includes a tread 4, a pair of sidewalls 6, a pair of clinches 8, a pair of beads 10, a carcass 12, a belt 14, a band 16, an inner liner 18, a pair of cushions 20, and a pair of insulations 22 as components thereof.

The tread 4 comes into contact with a road surface at a tread surface 24 thereof. The tread 4 has the tread surface 24 which comes into contact with a road surface. The tread surface 24 has a radially outwardly convex shape.

In the outer surface of the tire 2, a side surface 26 is connected to the tread surface 24. The outer surface of the tire 2 includes the tread surface 24 and a pair of side surfaces 26.

In the meridian cross-section, the contour of the tread surface 24 includes a plurality of arcs aligned in the axial direction. Among the plurality of arcs, an arc located on the outer side in the axial direction is a shoulder arc and has a smallest radius Rs. The contour line of the side surface 26 is connected to the shoulder arc.

A position indicated by reference character PT is the boundary between the shoulder arc and an arc located adjacent to the shoulder arc. A straight line LT is a tangent line that is tangent to the shoulder arc at the boundary PT.

A position indicated by reference character PS is the boundary between the shoulder arc and the contour line of the side surface 26. A straight line LS is a tangent line that is tangent to the shoulder arc at the boundary PS.

Reference character TE is the point of intersection of the tangent line LT and the tangent line LS. In the present invention, the point of intersection TE is a reference end of the tread 4. A length indicated by a double-headed arrow WT is the distance in the axial direction from a first reference end TE to a second reference end TE. In the present invention, the distance WT in the axial direction is the width of the tread 4.

In the tire 2, the ratio (WT/WA) of the width WT of the tread 4 to the cross-sectional width WA of the tire 2 is not less than 75% and not greater than 90%.

The tread 4 includes a cap portion 28 and a base portion 30.

The cap portion 28 includes the tread surface 24. The cap portion 28 comes into contact with a road surface. The cap portion 28 is formed from a crosslinked rubber for which wear resistance and grip performance are taken into consideration.

The base portion 30 is located radially inward of the cap portion 28. Each end 30e of the base portion 30 is located axially inward of an end 28e of the cap portion 28. The entirety of the base portion 30 is covered with the cap portion 28. The base portion 30 does not come into contact with a road surface unless the tread 4 is worn away and the base portion 30 becomes exposed. For the base portion 30, unlike the cap portion 28, wear resistance and grip performance are not taken into consideration. In FIG. 1, a length indicated by a double-headed arrow B is the thickness of the base portion 30. The thickness B of the base portion 30 is measured along the equator plane CL.

The base portion 30 is formed from a crosslinked rubber that has low heat generation properties. A loss tangent of the base portion 30 at 30°C (hereinafter, referred to as loss tangent LTb of the base portion 30) is lower than a loss tangent of the cap portion 28 at 30°C (hereinafter, referred to as loss tangent LTc of the cap portion 28). Specifically, the ratio (LTb/LTc) of the loss tangent LTb of the base portion 30 to the loss tangent LTc of the cap portion 28 is preferably not less than 0.15 and preferably not greater than 0.55.

In the tire 2, the loss tangent LTb of the base portion 30 is preferably not greater than 0.11. The base portion 30 contributes to reducing rolling resistance. In this respect, the loss tangent LTb is preferably lower, so that a preferable lower limit thereof is not set.

In the tire 2, the base portion 30 is formed such that, in the meridian cross-section of the tire 2, the base portion 30 has a uniform thickness at a crown portion and gradually becomes thinner at each shoulder portion with decreasing distance to an end thereof.

For example, the ratio of the thickness B of the base portion 30 to the thickness of the tread 4, measured along the equator plane CL, is set in the range of not less than 10% and not greater than 80%. When importance is placed on rolling resistance, the tread 4 is formed such that the base portion 30 is thick. When importance is placed on grip performance, the tread 4 is formed such that the base portion 30 is thin.

Each sidewall 6 is connected to an end of the tread 4. The sidewall 6 is located radially inward of the tread 4. The sidewall 6 is formed from a crosslinked rubber for which cut resistance is taken into consideration.

Each clinch 8 is located radially inward of the sidewall 6. The clinch 8 comes into contact with the rim R. The clinch 8 is formed from a crosslinked rubber for which wear resistance is taken into consideration.

Each bead 10 is located axially inward of the clinch 8. The bead 10 is located radially inward of the sidewall 6.

The bead 10 includes a core 32 and an apex 34. The core 32 extends in the circumferential direction. The core 32 includes a steel wire which is not shown. The apex 34 is located radially outward of the core 32. The apex 34 is tapered radially outward. The apex 34 is formed from a crosslinked rubber that has high stiffness.

The carcass 12 is located inward of the tread 4, the pair of sidewalls 6, and the pair of clinches 8. The carcass 12 extends on and between a first bead 10 and a second bead 10 which are the pair of beads 10. The carcass 12 includes at least one carcass ply 36.

The carcass 12 of the tire 2 is composed of one carcass ply 36 in consideration of reduction of rolling resistance. The carcass ply 36 includes a large number of carcass cords aligned with each other, which are not shown. These carcass cords intersect the equator plane CL. The carcass 12 of the tire 2 has a radial structure. In the tire 2, a cord formed from an organic fiber is used as each carcass cord. Examples of the organic fiber include nylon fibers, rayon fibers, polyester fibers, and aramid fibers.

The carcass ply 36 includes a ply body 36a and a pair of first turned-up portions 36b. The ply body 36a extends between the first bead 10 and the second bead 10. Each turned-up portion 36b is connected to the ply body 36a and turned up around the bead 10 from the inner side toward the outer side in the axial direction.

The belt 14 is located radially inward of the tread 4. The belt 14 is stacked on the carcass 12.

In FIG. 1, a length indicated by a double-headed arrow WR is the width in the axial direction of the belt 14. The width WR in the axial direction is the distance in the axial direction from a first end 14e to a second end 14e of the belt 14. The above-described equator plane CL intersects the belt 14 at the center of the width WR in the axial direction of the belt 14.

In the tire 2, the width WR in the axial direction of the belt 14 is not less than 85% and not greater than 100% of the width WT of the tread 4.

The belt 14 includes an inner layer 38 and an outer layer 40. The inner layer 38 is located radially outward of the ply body 36a, and stacked on the ply body 36a. The outer layer 40 is located radially outward of the inner layer 38, and stacked on the inner layer 38.

In the tire 2, one or more layers may be provided between the inner layer 38 and the outer layer 40. From the viewpoint of weight reduction, the belt 14 is preferably composed of two layers including the inner layer 38 and the outer layer 40.

As shown in FIG. 1, each end 40e of the outer layer 40 is located axially inward of an end 38e of the inner layer 38. The outer layer 40 is narrower than the inner layer 38. The length from the end 40e of the outer layer 40 to the end 38e of the inner layer 38 is not less than 3 mm and not greater than 10 mm. The above-described width WR in the axial direction of the belt 14 is represented as the width in the axial direction of the wide inner layer 38. The end 38e of the inner layer 38 is the end 14e of the belt 14.

Each of the inner layer 38 and the outer layer 40 includes a large number of belt cords aligned with each other, which are not shown. These belt cords are covered with a topping rubber. Each belt cord is tilted relative to the equator plane CL. An angle of the belt cord with respect to the equator plane CL (tilt angle of the belt cord) is not less than 10 degrees and not greater than 35 degrees. The direction in which the belt cords (inner belt cords) included in the inner layer 38 are tilted is opposite to the direction in which the belt cords (outer belt cords) included in the outer layer 40 are tilted. The tilt angle of the inner belt cords and the tilt angle of the outer belt cords are equal to each other. The material of each belt cord is steel.

The band 16 is located between the tread 4 and the belt 14 in the radial direction. The band 16 is stacked on the belt 14.

The band 16 includes a helically wound band cord which is not shown. The band cord is covered with a topping rubber. The band cord extends substantially in the circumferential direction. Specifically, an angle of the band cord with respect to the circumferential direction is not greater than 5°. The band 16 has a jointless structure. A cord formed from an organic fiber is used as the band cord. Examples of the organic fiber include nylon fibers, rayon fibers, polyester fibers, and aramid fibers.

An end 16e of the band 16 is located axially outward of the end 14e of the belt 14. The length from the end 14e of the belt 14 to the end 16e of the band 16 is not less than 3 mm and not greater than 7 mm. The band 16 holds the end 14e of the belt 14.

The band 16 of this tire 2 is a full band. The full band has ends opposed to each other across the equator plane CL. The band 16 intersects the equator plane CL. The band 16 covers the entirety of the belt 14. The band 16 holds the entirety of the belt 14. In the tire 2, a shape change of a ground-contact surface is suppressed.

The band 16 may be composed of a pair of edge bands that are disposed so as to be spaced apart from each other in the axial direction with the equator plane CL therebetween and are each formed so as to cover a portion at the end 14e of the belt 14. In this case, the band 16 contributes to reducing the weight of the tire 2. In order to increase the stiffness of the tread 4, the band 16 may include a full band and a pair of edge bands. From the viewpoint of weight reduction and stabilization of the ground-contact surface, the band 16 of this tire 2 is preferably composed of a full band like the band 16 shown in FIG. 1.

The inner liner 18 is located inward of the carcass 12. The inner liner 18 forms an inner surface of the tire 2. The inner liner 18 is formed from a crosslinked rubber that has an excellent air blocking property. The inner liner 18 maintains the internal pressure of the tire 2.

The respective cushions 20 are located so as to be spaced apart from each other in the axial direction. Each cushion 20 is located between the ends of the belt 14 and the band 16 and the carcass 12. The cushion 20 is formed from a crosslinked rubber that has low stiffness. In the tire 2, the cushions 20 are not essential components. Depending on the specifications of the tire 2, the cushions 20 may not necessarily be provided.

Each insulation 22 is located between the carcass 12 and the inner liner 18. A first end 22ea of the insulation 22 is located axially inward of the end 14e of the belt 14. A second end 22eb of the insulation 22 is located radially inward of the maximum width position PW. The second end 22eb of the insulation 22 is located radially outward of the bead 10. The insulation 22 is formed from a crosslinked rubber for which adhesiveness is taken into consideration.

In the tire 2, at a portion where each insulation 22 is provided, the inner liner 18 is joined to the carcass 12 via the insulation 22. The inner liner 18 is joined directly to the carcass 12 at a portion between the first end 22ea of a first insulation 22 and the first end 22ea of a second insulation 22 which is not shown, and a portion where no insulation 22 is provided, such as an inner portion from the second end 22eb of each insulation 22. The entirety of the inner liner 18 may be joined to the carcass 12 by the insulations 22. From the viewpoint of reduction of rolling resistance, as shown in FIG. 1, preferably, a pair of insulations 22 disposed so as to be spaced apart from each other in the axial direction are provided, and each insulation 22 is disposed in a zone between the end 14e of the belt 14 and the maximum width position PW.

Grooves 42 are formed on the tread 4 of the tire 2. The tread 4 has the grooves 42. Accordingly, a tread pattern is formed. The portion of the tread surface 24 other than the grooves 42 is also referred to as land surface 44.

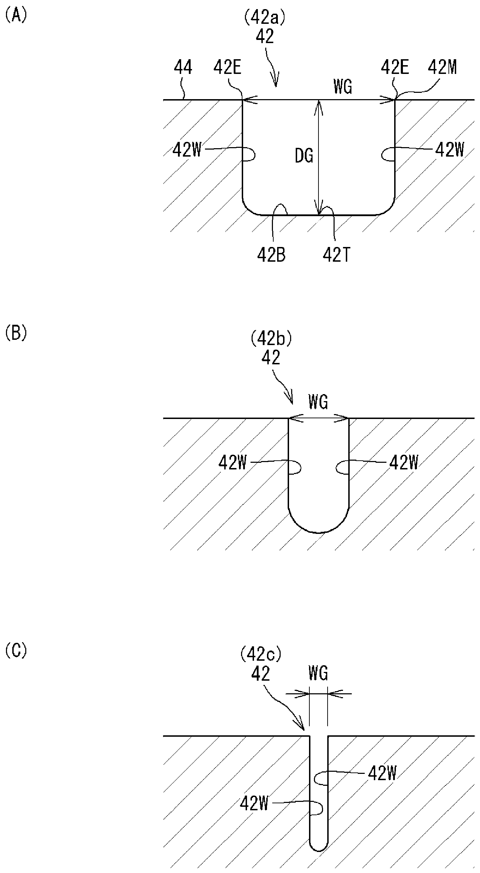

FIG. 2 shows an example of the grooves 42 formed on the tread 4. FIG. 2 shows cross-sections of these grooves 42. The main configurations of the grooves 42 will be described with reference to FIG. 2.

Each groove 42 has a pair of wall surfaces 42W including a groove opening 42M, and a bottom surface 42B including a groove bottom 42T. The groove width of the groove 42 is represented as the distance between a first wall surface 42W and a second wall surface 42W which are the pair of wall surfaces 42W, that is, the inter-wall distance.

In FIG. 2, a length indicated by each double-headed arrow WG is the groove width of the groove 42 at the groove opening 42M. The groove width WG is represented as the shortest distance from a first edge 42E to a second edge 42E which are a pair of edges 42E forming the groove opening 42M.

In the case where each edge of the groove opening 42M is chamfered and the groove opening 42M of the groove 42 is tapered, unless otherwise specified, the groove width WG at the groove opening 42M is obtained with the point of intersection of an extension line of the contour line of each wall surface 42W and an extension line of the contour line of the land surface 44 being defined as a virtual edge.

A length indicated by a double-headed arrow DG is the groove depth of the groove 42. The groove depth DG of the groove 42 is represented as the shortest distance from a line segment connecting the left and right edges 42E to the groove bottom 42T of the groove 42.

For example, the position, the groove width WG, and the groove depth DG of the groove 42 are determined as appropriate according to the specifications of the tire 2.

A groove 42a shown in part A of FIG. 2 is a main groove. The main groove 42a has a groove width WG of not less than 1.5 mm at the groove opening 42M. The main groove 42a has a large groove width. The main groove 42a is a groove in which the pair of wall surfaces 42W do not come into contact with each other even when the tire 2 comes into contact with a road surface.

In the present invention, the groove 42 having a groove width WG of not less than 1.5 mm and exceeding 2% of the width WT of the tread 4 is a main groove.

A groove 42b shown in part B of FIG. 2 is a narrow groove. The narrow groove 42b also has a groove width WG of not less than 1.5 mm at the groove opening 42M. The narrow groove 42b has a smaller groove width than the main groove 42a. The narrow groove 42b is a groove in which the pair of wall surfaces 42W may come into contact with each other when the tire 2 comes into contact with a road surface.

In the present invention, the groove 42 having a groove width WG of not less than 1.5 mm and not greater than 2% of the width WT of the tread 4 is a narrow groove.

A groove 42c shown in section C in FIG. 2 is a sipe. The sipe 42c has a groove width WG of less than 1.5 mm at the groove opening 42M. The sipe 42c has an even smaller groove width than the narrow groove 42b.

In the present invention, the groove 42 having a groove width WG of less than 1.5 mm is a sipe.

When a groove 42 is formed by combining different types of grooves in the radial direction, the type of the groove 42 is specified on the basis of the groove at a portion including the groove opening 42M.

The grooves 42 of the tire 2 shown in FIG. 1 include a circumferential groove 46 continuously extending in the circumferential direction. In the tire 2, a plurality of circumferential grooves 46 are formed on the tread 4 so as to be aligned in the axial direction.

Among the four circumferential grooves 46, a circumferential groove 46 located on each outermost side in the axial direction is a circumferential sipe 50. The circumferential sipe 50 is a sipe continuously extending in the circumferential direction.

Among the plurality of circumferential grooves 46, a circumferential groove 46 located between a pair of circumferential sipes 50 is a circumferential main groove 48. The circumferential main groove 48 is a main groove continuously extending in the circumferential direction.

The plurality of circumferential grooves 46 include a plurality of circumferential main grooves 48 aligned in the axial direction, and a pair of circumferential sipes 50 each located on the outermost side in the axial direction.

In the tire 2 shown in FIG. 1, four circumferential main grooves 48 are formed on the tread 4.

Among the four circumferential main grooves 48, a circumferential groove 48 located on each outermost side in the axial direction is a shoulder circumferential main groove 48s. A circumferential main groove 48 located axially inward of the shoulder circumferential main groove 48s is a middle circumferential main groove 48m. On the tread 4 of the tire 2, a pair of middle circumferential main grooves 48m and a pair of shoulder circumferential main grooves 48s are formed.

In FIG. 1, a length indicated by a double-headed arrow d is the groove depth of the circumferential main groove 48. A length indicated by each reference character w is the groove width of the circumferential main groove 48.

The groove depth d of the circumferential main groove 48 is preferably not less than 70% and not greater than 95% of the thickness of the tread 4. As the thickness of the tread 4 for specifying the groove depth d, a virtual thickness obtained on the assumption that there are no grooves 42 is used. This virtual thickness is represented as the sum of the groove depth d and the tread thickness at the measurement position of the groove depth d.

The groove width w of the circumferential main groove 48 is preferably not less than 3% and not greater than 15% of the width WT of the tread 4.

In the tire 2, a plurality of circumferential main grooves 48 are formed on the tread 4 so as to be aligned in the axial direction. Accordingly, at least three land portions 52 are formed in the tread 4. The plurality of circumferential main grooves 48 divide the tread 4 into at least three land portions 52 aligned in the axial direction.

As shown in FIG. 1, five land portions 52 are formed in the tread 4 of the tire 2. Land surfaces of these land portions 52 are included in the tread surface 24.

Among the five land portions 52, a land portion 52 located on each outermost side in the axial direction is a shoulder land portion 52s. A land portion 52 located axially inward of the shoulder land portion 52s is a middle land portion 52m. A land portion 52 located axially inward of the middle land portion 52m, that is, a land portion 52 located at the center among the five land portions 52 which are aligned in the axial direction, is a center land portion 52c. In the tire 2, the center land portion 52c includes the equator PC.

In the tread 4 of the tire 2, the center land portion 52c, a pair of the middle land portions 52m, and a pair of the shoulder land portions 52s are formed.

The width in the axial direction of each shoulder land portion 52s is represented as the distance in the axial direction from the boundary between the shoulder circumferential main groove 48s and the land surface of the shoulder land portion 52s to the end TE of the tread 4.

In the tire 2, the ratio of the width in the axial direction of each shoulder land portion 52s to the width WT of the tread 4 is preferably not less than 15% and not greater than 30%.

The width in the axial direction of the land portion 52 located between two circumferential main grooves 48, such as the center land portion 52c and the middle land portions 52m, is represented as the width in the axial direction of the land surface thereof. This width in the axial direction is determined as appropriate in consideration of the number of circumferential main grooves 48 formed on the tread 4, the groove widths w thereof, etc.

At the tread of a tire, a ground-contact state and a non-ground-contact state are repeated. The tread surface is curved such that the crown portion bulges outward. In the tread that is in a non-ground-contact state, the land surface of each shoulder land portion is located radially inward of the land surface of a center land portion. When the tread comes into contact with a road surface, the tread is pressed against the road surface. The tread becomes deformed. The center land portion moves radially inward, and the ground-contact surface expands axially outward from the equator. Then, each shoulder land portion comes into contact with the ground. The tread in a ground-contact state becomes deformed such that the tread surface warps in the opposite direction. Compressive strain is generated in each shoulder land portion.

The inventors have conducted studies focusing on the compressive strain generated in each shoulder land portion. As a result, the inventors have found that: if generation of compressive strain can be suppressed, rolling resistance can be reduced without decreasing WET performance; if a groove is formed in a specific region of each shoulder land portion (specifically, the portion between the shoulder circumferential main groove and the edge of the outer layer), generation of compressive strain can be effectively suppressed; and, depending on the groove type, damage such as belt edge loose (BEL) and tread loose cracking (TLC) may occur starting from the formed groove, and thus the inventors have completed the present invention.

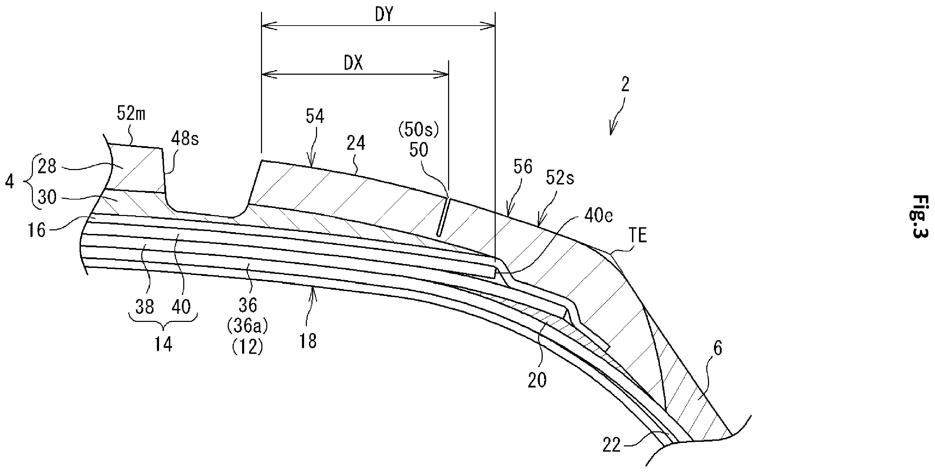

FIG. 3 shows a part of the tire 2 shown in FIG. 1. FIG. 3 shows the shoulder land portion 52s of a tread portion.

A circumferential sipe 50 is formed on each shoulder land portion 52s of the tire 2. The circumferential sipe 50 continuously extends in the circumferential direction. The circumferential sipe 50 divides the shoulder land portion 52s into an inner land portion 54 and an outer land portion 56.

As shown in FIG. 3, the circumferential sipe 50 is located between the shoulder circumferential main groove 48s and the end 40e of the outer layer 40 in the axial direction. The groove width of the circumferential sipe 50 is smaller than the groove width w of the shoulder circumferential main groove 48s.

The influence of the circumferential sipe 50 on the stiffness of the shoulder land portion 52s is small. The shoulder land portion 52s has required stiffness. In the tire 2, reduction of cornering power is suppressed.

In FIG. 3, a length indicated by a double-headed arrow DY is the distance in the axial direction from the shoulder circumferential main groove 48s to the end 40e of the outer layer 40. A length indicated by a double-headed arrow DX is the distance in the axial direction from the shoulder circumferential main groove 48s to the circumferential sipe 50. The distance DX in the axial direction is the width in the axial direction of the land surface of the inner land portion 54.

As described above, in the tire 2, the circumferential sipe 50 is located between the shoulder circumferential main groove 48s and the end 40e of the outer layer 40 in the axial direction. In particular, in the tire 2, the ratio (DX/DY) of the distance DX in the axial direction from the shoulder circumferential main groove 48s to the circumferential sipe 50 to the distance DY in the axial direction from the shoulder circumferential main groove 48s to the end 40e of the outer layer 40 is not less than 10% and not greater than 95%.

Since the ratio (DX/DY) is not less than 10%, interference between the circumferential sipe 50 and the shoulder circumferential main groove 48s is suppressed. The inner land portion 54 has required stiffness. The circumferential sipe 50 can effectively contribute to suppressing generation of compressive strain. Since generation of compressive strain is suppressed, reduction of rolling resistance can be achieved in the tire 2. From this viewpoint, the ratio (DX/DY) is preferably not less than 35%, more preferably not less than 60%, and further preferably not less than 75%.

Since the ratio (DX/DY) is not greater than 95%, the circumferential sipe 50 is located at an appropriate distance from the end 40e of the outer layer 40. Interference between the circumferential sipe 50 and the end 40e of the outer layer 40 is suppressed. Occurrence of damage such as loosening in a portion at the end 40e of the outer layer 40 is suppressed. In this case as well, the circumferential sipe 50 can stably and sufficiently exhibit a function of suppressing generation of compressive strain. Since generation of compressive strain is suppressed, reduction of rolling resistance can be achieved in the tire 2. From this viewpoint, the ratio (DX/DY) is preferably not greater than 90% and more preferably not greater than 85%.

In the tire 2, in each shoulder land portion 52s, the circumferential sipe 50 having a groove width smaller than the groove width of the shoulder circumferential main groove 48s is formed in a specific region of the portion between the shoulder circumferential main groove 48s and the end 40e of the outer layer 40. Accordingly, generation of compressive strain is suppressed, so that reduction of rolling resistance can be achieved.

The circumferential groove 46 formed in the specific region is not the above-mentioned narrow groove, but a circumferential sipe 50 having a groove width even smaller than the narrow groove. Since the circumferential sipe 50 has a small groove width, the circumferential sipe 50 is less likely to interfere with other components. The degree of freedom in the position where the circumferential sipe 50 is provided is higher than that of the narrow groove. In the tire 2, a circumferential sipe 50 can be provided near a position that can contribute to reducing compressive strain. In other words, in the case where a narrow groove is provided in order to reduce compressive strain, even if a circumferential sipe 50 is provided at a position where damage occurs starting from the narrow groove, damage is less likely to occur starting from the circumferential sipe 50. The durability of the tire 2 is significantly improved as compared to that of a tire provided with a narrow groove in order to reduce compressive strain. Since the circumferential sipe 50 continues to exhibit its function, the tire 2 can have further reduced rolling resistance.

In the tire 2, for reducing rolling resistance, it is not necessary to take low heat generation properties into consideration for the crosslinked rubber forming the cap portion 28. In the tire 2, the cap portion 28 can be formed from a crosslinked rubber for which importance is placed on grip performance on a wet road surface (hereinafter, referred to as WET performance).

The tire 2 can achieve reduction of rolling resistance without decreasing WET performance.

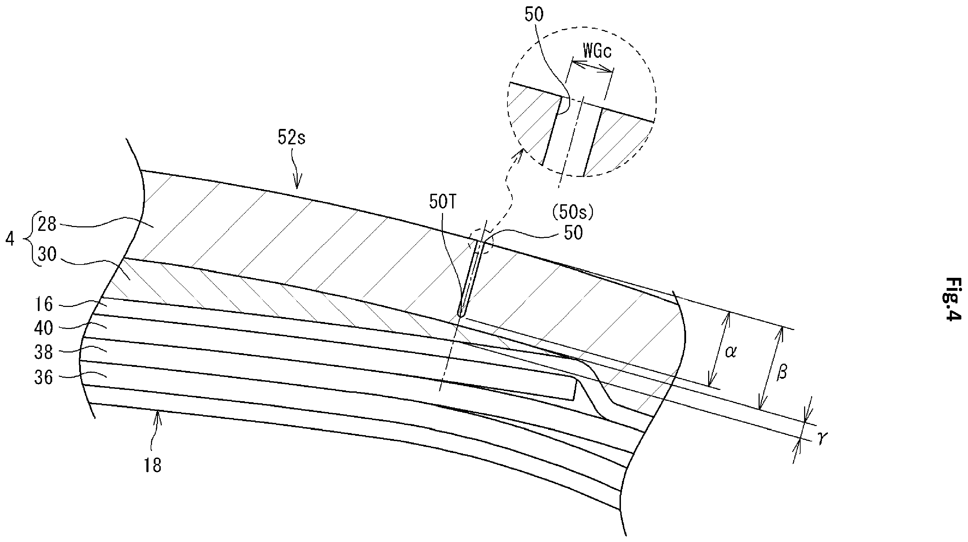

FIG. 4 shows a part of the shoulder land portion 52s shown in FIG. 3. FIG. 4 shows a portion where the circumferential sipe 50 is provided.

In FIG. 4, a length indicated by a double-headed arrow WGc is the groove width of the circumferential sipe 50. The groove width WGc is specified in the tire 2 in the standardized state.

A length indicated by reference character α is the groove depth of the circumferential sipe 50. The length indicated by reference character β is the thickness of the cap portion 28. The thickness β is measured along a line segment indicating the groove depth α, on the assumption that the circumferential sipe 50 is not provided. The thickness β of the cap portion 28 is the thickness of the cap portion 28 obtained, on the assumption that the circumferential sipe 50 is not provided, at the position of the circumferential sipe 50.

As described above, the groove width WGc of the circumferential sipe 50 is smaller than the groove width w of the shoulder circumferential main groove 48s. The groove width WGc is preferably less than 1.5 mm. Accordingly, the influence of the circumferential sipe 50 on the stiffness of the shoulder land portion 52s is suppressed. The shoulder land portion 52s has required stiffness. This tire 2 can suppress a decrease in cornering power. From this viewpoint, the groove width WGc is preferably not greater than 1.4 mm and more preferably not greater than 1.3 mm.

From the viewpoint that the circumferential sipe 50 can effectively contribute to reducing compressive strain, the groove width WGc is preferably not less than 0.8 mm, more preferably not less than 0.9 mm, and further preferably not less than 1.0 mm.

A groove bottom 50T of the circumferential sipe 50 is located radially outward of the boundary between the cap portion 28 and the base portion 30. In other words, the cap portion 28 is located between the groove bottom 50T of the circumferential sipe 50 and the base portion 30. The cap portion 28 located between the groove bottom 50T and the base portion 30 suppresses occurrence of damage starting from the circumferential sipe 50. The circumferential sipe 50 can stably exhibit its function. The tire 2 can have a reduced risk of occurrence of damage starting from the circumferential sipes 50 and can have reduced rolling resistance. From this viewpoint, the groove bottom 50T of the circumferential sipe 50 is preferably located radially outward of the boundary between the cap portion 28 and the base portion 30.

The ratio (α/β) of the groove depth α of the circumferential sipe 50 to the thickness β of the cap portion 28 is preferably not less than 40% and not greater than 95%.

When the ratio (α/β) is set to be not less than 40%, the circumferential sipe 50 can effectively contribute to suppressing generation of compressive strain. Since generation of compressive strain is suppressed, this tire 2 can have reduced rolling resistance. From this viewpoint, the ratio (α/β) is preferably not less than 40%, more preferably not less than 60%, and even more preferably not less than 80%.

When the ratio (α/β) is set to be not greater than 95%, the cap portion 28 can contribute to reducing the risk of occurrence of damage starting from the circumferential sipe 50. Since the risk of occurrence of damage is reduced, the circumferential sipe 50 can stably exhibit its function. The tire 2 can have a reduced risk of occurrence of damage starting from the circumferential sipes 50 and can have reduced rolling resistance. From this viewpoint, the ratio (α/β) is more preferably not greater than 90%.

When the shoulder land portion 52s is pressed against a road surface, strain is generated at the groove bottom 50T of the circumferential sipe 50. This strain may act as a factor that increases rolling resistance. In this case, a part of the rolling resistance reduction effect achieved by the function of suppressing generation of compressive strain by the circumferential sipe 50 is cancelled out by the strain generated at the groove bottom 50T.

In the tire 2, for example, as shown in FIG. 4, the base portion 30 is located radially inward of the circumferential sipe 50. As described above, the loss tangent LTb of the base portion 30 is lower than the loss tangent LTc of the cap portion 28.

In the tire 2, the base portion 30 which is located radially inward of the circumferential sipe 50 suppresses heat generation caused by strain generated at the groove bottom 50T of the circumferential sipe 50. The tire 2 can sufficiently exhibit a rolling resistance reduction effect achieved by the function of suppressing generation of compressive strain by the circumferential sipe 50.

The groove bottom 50T of the circumferential sipe 50 may be formed by the base portion 30. However, the base portion 30 is more fragile than the cap portion 28. If strain is concentrated on the groove bottom 50T of the circumferential sipe 50, damage may occur starting from the groove bottom 50T. From the viewpoint of being able to reduce the risk of damage at the groove bottom 50T of the circumferential sipe 50, the cap portion 28 is preferably placed between the groove bottom 50T of the circumferential sipe 50 and the base portion 30.

In FIG. 4, a length indicated by a double-headed arrow γ is the thickness of the base portion 30 at the groove bottom 50T of the circumferential sipe 50. The thickness γ of the base portion 30 is measured along the line segment indicating the groove depth α of the circumferential sipe 50.

In the tire 2, the ratio (γ/B) of the thickness γ of the base portion 30 at the groove bottom 50T of the circumferential sipe 50 to the thickness B of the base portion 30 measured along the equator plane CL is preferably not less than 40% and not greater than 80%.

When the ratio (γ/B) is set to be not less than 40%, the base portion 30 which is located radially inward of the circumferential sipe 50, suppresses heat generation caused by strain generated at the groove bottom 50T of the circumferential sipe 50. The tire 2 can sufficiently exhibit a rolling resistance reduction effect achieved by the function of suppressing generation of compressive strain by the circumferential sipe 50. From this viewpoint, the ratio (γ/B) is more preferably not less than 50%.

When the ratio (γ/B) is set to be not greater than 80%, the tire 2 can have a reduced risk of damage at the groove bottom 50T of the circumferential sipe 50. From this viewpoint, the ratio (γ/B) is more preferably not greater than 70%.

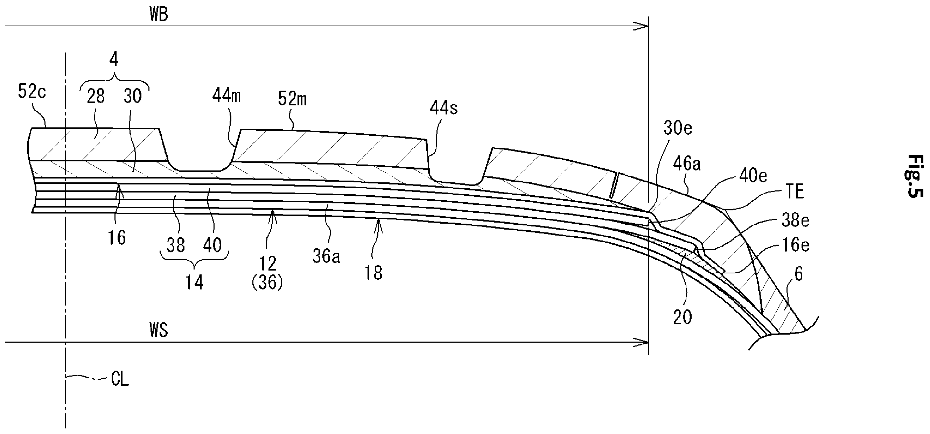

FIG. 5 shows a part of the tire 2 shown in FIG. 1. FIG. 5 shows a part of the tread portion. As shown in FIG. 5, the end 30e of the base portion 30 is located axially inward of the end 38e of the inner layer 38. The position of the end 30e of the base portion 30 substantially coincides with the position of the end 40e of the outer layer 40 in the axial direction.

In FIG. 5, a length indicated by a double-headed arrow WB is the width in the axial direction of the base portion 30. The width WB in the axial direction is the distance in the axial direction from a first end 30e of the base portion 30 to a second end 30e of the base portion 30. A length indicated by a double-headed arrow WS is the width in the axial direction of the outer layer 40. The width WS in the axial direction is the distance in the axial direction from the first end 40e to the second end 40e of the outer layer 40.

In a tire during running, a portion at each shoulder land portion thereof actively moves. Therefore, various types of strain which is a factor that increases rolling resistance is generated in this portion. Strain generated in a portion at each end of a belt is also a factor that causes damage such as belt edge loose (BEL).

In order to ensure a volume of a base portion formed from a crosslinked rubber that has low heat generation properties and to reduce rolling resistance, in a conventional tire, a tread is formed such that each end of the base portion is located axially outward of an end of a band and the base portion covers the entireties of a belt and the band.

However, the strength of the crosslinked rubber that has low heat generation properties is low. Therefore, in the conventional tread having the above-described configuration, the existence of risk of occurrence of damage such as BEL is undeniable. Establishment of a technology capable of achieving reduction of the risk of damage is also required such that the tire can continue to stably exhibit a rolling resistance reduction effect.

In the tire 2, by forming the circumferential sipe 50 in the specific region of each shoulder land portion 52s, generation of compressive strain which is a factor that increases rolling resistance is suppressed. Therefore, even when the tread 4 is formed such that each end 30e of the base portion 30 is located axially inward of the end 38e of the inner layer 38, the rolling resistance of the tire 2 can be reduced. Since the shoulder portion can be formed by only the cap portion 28, the risk of occurrence of damage such as BEL can be reduced. The tire 2 can continue to stably exhibit a rolling resistance reduction effect. The tire 2 can contribute to improvement of the fuel efficiency of a vehicle. Since the cap portion 28 can be formed from a crosslinked rubber for which importance is placed on WET performance, the tire 2 can also continue to exhibit good WET performance. From this viewpoint, in the tire 2, each end 30e of the base portion 30 is preferably located axially inward of the end 38e of the inner layer 38.

From the viewpoint of reducing the risk of occurrence of damage, preferably, the position of the end 30e of the base portion 30 substantially coincides with the position of the end 40e of the outer layer 40 in the axial direction. Specifically, the ratio (WB/WS) of the width WB in the axial direction of the base portion 30 to the width WS in the axial direction of the outer layer 40 is preferably not less than 95% and not greater than 105%.

When the ratio (WB/WS) is set to be not less than 95%, the volume of the base portion 30 in the tread 4 is increased. The tread 4 can contribute to reducing rolling resistance. From this viewpoint, the ratio (WB/WS) is more preferably not less than 98%.

When the ratio (WB/WS) is set to be not greater than 105%, the base portion 30 is placed so as to be sufficiently spaced apart from the ends of the belt 14 and the band 16. The placement of the base portion 30 can contribute to reducing the risk of occurrence of damage. From this viewpoint, the ratio (WB/WS) is more preferably not greater than 102%.

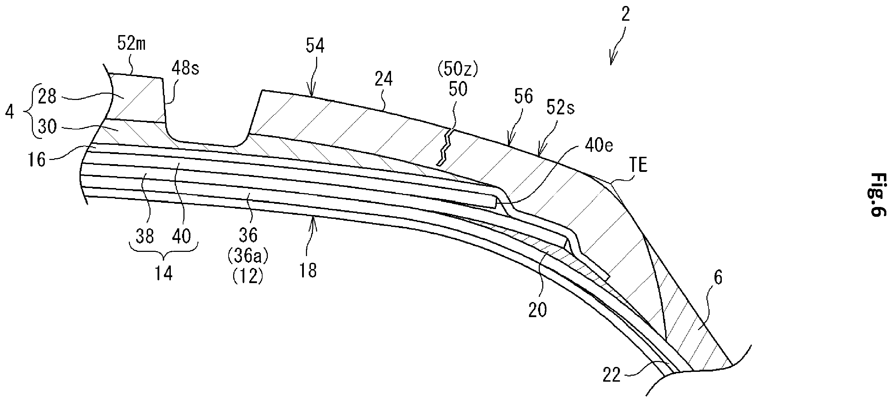

FIG. 6 shows a modification of the circumferential sipe 50. The circumferential sipe 50 described above is a sipe extending straight in each of the depth direction and the length direction thereof (hereinafter, referred to as straight sipe 50S). The circumferential sipe 50 shown in FIG. 6 may be a sipe extending in a zigzag manner in each of the depth direction and the length direction thereof as shown in FIG. 6 (hereinafter, referred to as zigzag sipe 50Z).

Each wall surface of the zigzag sipe 50Z has an uneven three-dimensional shape. The zigzag sipe 50Z is also referred to as Miura-fold (three-dimensional) sipe. In other words, the zigzag sipe 50Z is shaped by a blade having a Miura-fold structure.

In the tire 2 during running, the wall surfaces of the zigzag sipes 50Z come into contact with each other and support each other. Since the wall surfaces have a three-dimensional shape, the wall surfaces effectively support each other as compared to a sipe having flat wall surfaces, that is, the straight sipe 50S. It is apparent that this zigzag sipe 50Z increases the stiffness of the shoulder land portion 52s. Since deformation of the shoulder land portion 52s is effectively suppressed, the tire 2 can reduce compressive strain. The tire 2 can also increase cornering power. From such a viewpoint, the circumferential sipe 50 preferably extends in a zigzag manner in each of the length direction and the depth direction thereof.

In the case where the circumferential sipe 50 extends in a zigzag manner in each of the length direction and the depth direction thereof, when the circumferential sipe 50 is located between the shoulder circumferential main groove 48s and the end 40e of the outer layer 40 in the axial direction, the groove width WGc of the circumferential sipe 50 is not less than 0.8 mm and less than 1.5 mm, and the groove bottom 50T of the circumferential sipe 50 is located radially outward of the boundary between the cap portion 28 and the base portion 30, the circumferential sipe 50 can effectively contribute to reducing rolling resistance without decreasing the WET performance of the tire 2.

The number of folds in the depth direction of the zigzag sipe 50Z is preferably not less than 3 and not greater than 8. Accordingly, the wall surfaces can effectively support each other, so that the shoulder land portion 52s can effectively increase its stiffness. Since deformation of the shoulder land portion 52s is effectively suppressed, the tire 2 can reduce compressive strain. From this viewpoint, the number of folds is more preferably not less than 4 and not greater than 7. The number of folds in the depth direction of the zigzag sipe 50Z shown in FIG. 6 is 4.

The number of folds in the length direction of the zigzag sipe 50Z is determined as appropriate according to the length of the zigzag sipe 50Z.

As described above, according to the present invention, the tire 2 that can achieve reduction of rolling resistance without decreasing WET performance is obtained. In particular, the present invention exhibits a remarkable effect in the tire 2 for a passenger car in which the ratio of the width in the axial direction of each shoulder land portion 52s to the width WT of the tread 4 is not less than 15% and not greater than 30%.

### EXAMPLES

Hereinafter, the present invention will be described in further detail by means of examples, etc., but the present invention is not limited to these examples.

### [Example 1]

A pneumatic tire for a passenger car (tire designation = 205/55R16 91V) having the basic structure shown in FIG. 1 and having specifications shown in Table 1 below was obtained.

The ratio of the width in the axial direction of each shoulder land portion to the width WT of the tread was 17%.

The groove width w of each shoulder circumferential main groove was 5% of the tread width WT.

Each circumferential sipe was a straight sipe. This is indicated as "S" in the cell for sipe in Table 1.

The groove width WGc of the circumferential sipe was 1.2 mm.

The loss tangent LTb of the base portion was 0.10. The loss tangent LTc of the cap portion was 0.27.

The ratio (DX/DY) of the distance DX in the axial direction from the shoulder circumferential main groove to the circumferential sipe to the distance DY in the axial direction from the shoulder circumferential main groove to the end of the outer layer was 80%.

The ratio (α/β) of the groove depth α of the circumferential sipe to the thickness β of the cap portion was 90%.

### [Comparative Example 1]

A tire of Comparative Example 1 was obtained in the same manner as Example 1, except that no circumferential sipe was provided on each shoulder land portion.

### [Comparative Example 2]

A tire of Comparative Example 2 was obtained in the same manner as Comparative Example 1, except that the cap portion in the tire of Comparative Example 1 was replaced with a cap portion formed from a crosslinked rubber for which low heat generation properties are taken into consideration.

### [Comparative Example 3]

A tire of Comparative Example 3 was obtained in the same manner as Example 1, except that the circumferential sipes were replaced with circumferential narrow grooves having a groove width of 2.0 mm.

### [Example 2]

A tire of Example 2 was obtained in the same manner as Example 1, except that the circumferential sipes were changed to zigzag sipes as shown in FIG. 6. The fact that the circumferential sipes were changed to zigzag sipes is indicated as "Z" in the cell for sipe in Table 1. The number of folds in the depth direction of each zigzag sipe was 4.

### [Rolling Resistance]

Using a rolling resistance testing machine, a rolling resistance coefficient (RRC) was measured when a test tire ran on a drum at a speed of 80 km/h under the following conditions. The results are shown as indexes in the cells for "RRC" in Table 1 below with the result of Comparative Example 1 being regarded as 100. The higher the value is, the lower the rolling resistance of the tire is.
Rim: 16×6.5J
Internal pressure: 210 kPa
Vertical load: 4.82 kN

### [WET Performance]

Test tires were fitted onto rims (size = 16×6.5J) and inflated with air to adjust the internal pressures of the tires to 250 kPa. The tires were mounted to a test vehicle (passenger car). The test vehicle was driven on a test course with a wet road surface (water film thickness = 1.4 mm), and lap times were measured. The results are shown as indexes in the cells for "WET" in Table 1 below with the result of Comparative Example 1 being regarded as 100. The higher the value is, the better the WET performance is.

### [Durability]

A test tire was fitted onto a rim (size = 16×6.5J) and inflated with air to adjust the internal pressure thereof to 250 kPa. The tire was mounted to a drum type tire testing machine. A vertical load of 7.33 kN was applied to the tire, and the tire was caused to run on a drum (radius = 1.7 m) at a speed of 100 km/h. The acceptance criterion was that no damage (BEL and TLC) was observed on the tires after running 20,000 km. The results are shown in the cells for "Durability" in Table 1 below, with "G" indicating that the acceptance criterion was met and "NG" indicating that the acceptance criterion was not met.

### [Cornering Power]

A test tire was fitted onto a rim (size = 16×6.5J) and inflated with air to adjust the internal pressure thereof to 250 kPa. The tire was mounted to a flat belt type tire testing machine. A camber angle was set to 0 degrees. A vertical load of 4.3 kN was applied to the tire, a slip angle was set to 1.0 degree, the tire was caused to run on a belt at a speed of 10 km/h, and the cornering power was measured. The results are shown as indexes in the cells for "CP" in Table 1 below with the result of Comparative Example 1 being regarded as 100. The higher the value is, the larger the cornering power is and the better the steering stability is. In this evaluation, if the index is 97 or more, it is acceptable as it is determined that the decrease in cornering power is suppressed to a small level.

### [High-Speed Durability]

A test tire was fitted onto a rim (size = 16×6.5J) and inflated with air to adjust the internal pressure thereof to 230 kPa. The tire was mounted to a drum type tire testing machine at a negative camber angle. The camber angle was set to -3°. A vertical load of 4.48 kN was applied to the tire, and the tire was caused to run on a drum (radius = 1.7 m) at a speed of 270 km/h. The running time until the tire became broken was measured. The results are shown as indexes in the cells for "H/S" in Table 1 below with the result of Comparative Example 1 being regarded as 100. The higher the value is, the better the high-speed durability is. In this evaluation, if the index is 97 or more, it is acceptable as it is determined that the decrease in high-speed durability is suppressed to a small level.

**[Table 1]**

| | Comparative Example 1 | Comparative Example 2 | Example 1 | Example 2 | Comparative Example 3 |
|---|---|---|---|---|---|
| DX/DY [%] | - | - | 80 | 80 | 80 |
| WGc [mm] | - | - | 1.2 | 1.2 | 2.0 |
| α/β [%] | - | - | 90 | 90 | 90 |
| Sipe | - | - | S | Z | S |
| RRC | 100 | 103 | 103 | 102 | 100 |
| WET performance | 100 | 95 | 100 | 100 | 100 |
| Durability | G | G | G | G | G |
| CP | 100 | 98 | 98 | 99 | 95 |
| H/S | 100 | 98 | 98 | 99 | 97 |

As shown in Table 1, it is confirmed that, in each Example, reduction of rolling resistance is achieved without decreasing WET performance and a rolling resistance reduction effect is continuously exhibited. From the evaluation results, advantages of the present invention are clear.

The above-described technology capable of achieving reduction of rolling resistance without decreasing WET performance can also be applied to various tires.

## Claims

1. A tire (2) comprising a tread (4) configured to come into contact with a road surface, and a belt (14) located radially inward of the tread (4), wherein
the tread (4) has a plurality of circumferential main grooves (48) continuously extending in a circumferential direction,
the plurality of circumferential main grooves (48) divide the tread (4) into at least three land portions (52) aligned in an axial direction,
among the plurality of circumferential main grooves (48), a circumferential main groove (48) located on each outermost side in the axial direction is a shoulder circumferential main groove (48s),
among said at least three land portions (52), a land portion (52) located on each outermost side in the axial direction is a shoulder land portion (52s),
the belt (14) includes an inner layer (38) and an outer layer (40) located radially outward of the inner layer (38),
each end (40e) of the outer layer (40) is located axially inward of an end (38e) of the inner layer (38),
a circumferential sipe (50) is formed on the shoulder land portion (52s) so as to continuously extend in the circumferential direction,
a groove width (WGc) of the circumferential sipe (50) is smaller than a groove width (w) of the shoulder circumferential main groove (48s),
the circumferential sipe (50) is located between the shoulder circumferential main groove (48s) and the end (40e) of the outer layer (40) in the axial direction,
a ratio (DX/ DY) of a distance (DX) in the axial direction from the shoulder circumferential main groove (48s) to the circumferential sipe (50) to a distance (DY) in the axial direction from the shoulder circumferential main groove (48s) to the end (40e) of the outer layer (40) is not less than 10% and not greater than 95%, and
the tread (4) includes a cap portion (28) configured to come into contact with the road surface and a base portion (30) located radially inward of the cap portion (28),
**characterized in that**
a loss tangent (LTb) of the base portion (30) at 30°C is lower than a loss tangent (LTc) of the cap portion (28) at 30°C, wherein the loss tangent at 30°C is measured according to the standards of JIS K6394 under the conditions of initial strain = 10%, dynamic distortion = ±1 %, frequency = 10 Hz and stretch mode, and
each end (30e) of the base portion (30) is located axially inward of the end (38e) of the inner layer (38).

2. The tire (2) according to claim 1, wherein the groove width (WGc) of the circumferential sipe (50) is not less than 0.8 mm and less than 1.5 mm.

3. The tire (2) according to claim 1 or 2, wherein a groove bottom (50T) of the circumferential sipe (50) is located radially outward of a boundary between the cap portion (28) and the base portion (30).

4. The tire (2) according to claim 3, wherein a ratio (α/β) of a groove depth (α) of the circumferential sipe (50) to a thickness (β) of the cap portion (28) is not less than 40% and not greater than 95%.

5. The tire (2) according to any one of claims 1 to 4, wherein a ratio (WB/WS) of a width (WB) in the axial direction of the base portion (30) to a width (WS) in the axial direction of the outer layer (40) is not less than 95% and not greater than 105%.

6. The tire (2) according to any one of claims 1 to 5, wherein the circumferential sipe (50) extends in a zigzag manner in each of a length direction and a depth direction thereof.

## Patentansprüche

1. Reifen (2), der eine Lauffläche (4), die ausgebildet ist, mit einer Straßenoberfläche in Kontakt zu gelangen, und einen Gürtel (14) umfasst, der radial innerhalb der Lauffläche (4) angeordnet ist, wobei
die Lauffläche (4) mehrere Umfangshauptrillen (48) aufweist, die sich kontinuierlich in einer Umfangsrichtung erstrecken,
die mehreren Umfangshauptrillen (48) die Lauffläche (4) in zumindest drei Landabschnitte (52) aufteilen, die in einer Axialrichtung ausgerichtet sind,
unter den mehreren Umfangshauptrillen (48) eine Umfangshauptrille (48), die in der Axialrichtung auf der jeweiligen äußersten Seite angeordnet ist, eine Schulterumfangshauptrille (48s) ist,
unter den zumindest drei Landabschnitten (52) ein Landabschnitt (52), der in der Axialrichtung auf der jeweiligen äußersten Seite angeordnet ist, ein Schulterlandabschnitt (52s) ist,
der Gürtel (14) eine innere Lage (38) und eine äußere Lage (40) aufweist, die radial außerhalb der inneren Lage (38) angeordnet ist,
jedes Ende (40e) der äußeren Lage (40) axial innerhalb eines Endes (38e) der inneren Lage (38) angeordnet ist,
ein Umfangsfeinschnitt (50) derart in dem Schulterlandabschnitt (52s) gebildet ist, dass er sich kontinuierlich in der Umfangsrichtung erstreckt,
eine Rillenbreite (WGc) des Umfangsfeinschnitts (50) kleiner als eine Rillenbreite (w) der Schulterumfangshauptrille (48s) ist,
der Umfangsfeinschnitt (50) in der Axialrichtung zwischen der Schulterumfangshauptrille (48s) und dem Ende (40e) der äußeren Lage (40) angeordnet ist,
ein Verhältnis (DX/DY) einer Distanz (DX) in der Axialrichtung von der Schulterumfangshauptrille (48s) bis zu dem Umfangsfeinschnitt (50) zu einer Distanz (DY) in der Axialrichtung von der Schulterumfangshauptrille (48s) bis zu dem Ende (40e) der äußeren Lage (40) nicht kleiner als 10% und nicht größer als 95% ist und
die Lauffläche (4) einen Kappenabschnitt (28), der ausgebildet ist, mit der Straßenoberfläche in Kontakt zu gelangen, und einen Basisabschnitt (30) aufweist, der radial innerhalb des Kappenabschnitts (28) angeordnet ist,
**dadurch gekennzeichnet, dass**
ein Verlusttangens (LTb) des Basisabschnitts (30) bei 30°C kleiner als ein Verlusttangens (LTc) des Kappenabschnitts (28) bei 30°C ist, wobei der Verlusttangens bei 30°C gemäß den Standards von JIS K6394 unter den Bedingungen von Anfangsdehnung = 10%, dynamische Verzerrung = ±1%, Frequenz = 10 Hz und Streckmodus gemessen wird, und
jedes Ende (30e) des Basisabschnitts (30) axial innerhalb des Endes (38e) der inneren Lage (38) angeordnet ist.

2. Reifen (2) nach Anspruch 1, wobei die Rillentiefe (WGc) des Umfangsfeinschnitts (50) nicht kleiner als 0,8 mm und kleiner als 1,5 mm ist.

3. Reifen (2) nach Anspruch 1 oder 2, wobei ein Rillenboden (50T) des Umfangsfeinschnitts (50) radial außerhalb einer Grenze zwischen dem Kappenabschnitt (28) und dem Basisabschnitt (30) angeordnet ist.

4. Reifen (2) nach Anspruch 3, wobei ein Verhältnis (α/β) einer Rillentiefe (α) des Umfangsfeinschnitts (50) zu einer Dicke (β) des Kappenabschnitts (28) nicht kleiner als 40% und nicht größer als 95% ist.

5. Reifen (2) nach einem der Ansprüche 1 bis 4, wobei ein Verhältnis (WB/WS) einer Breite (WB) des Basisabschnitts (30) in der Axialrichtung zu einer Breite (WS) der äußeren Lage (40) in der Axialrichtung nicht kleiner als 95% und nicht größer als 105% ist.

6. Reifen (2) nach einem der Ansprüche 1 bis 5, wobei sich der Umfangsfeinschnitt (50) in einer Zickzack-Weise in jeder von einer Längenrichtung und einer Tiefenrichtung von diesem erstreckt.

## Revendications

1. Pneumatique (2) comprenant une bande de roulement (4) configurée pour venir en contact avec une surface routière, et une ceinture (14) située radialement à l'intérieur de la bande de roulement (4), dans lequel
la bande de roulement (4) a une pluralité de rainures principales circonférentielles (48) s'étendant en continu dans une direction circonférentielle,
la pluralité de rainures principales circonférentielles (48) divisent la bande de roulement (4) en au moins trois portions en relief (52) alignées dans une direction axiale,
parmi la pluralité de rainures principales circonférentielles (48), une rainure principale circonférentielle (48) située sur chaque côté le plus à l'extérieur dans la direction axiale est une rainure principale circonférentielle d'épaulement (48s),
parmi lesdites au moins trois portions en relief (52), une portion en relief (52) située sur chaque côté le plus à l'extérieur dans la direction axiale est une portion en relief d'épaulement (52s),
la ceinture (14) inclut une couche intérieure (38) et une couche extérieure (40) située radialement à l'extérieur de la couche intérieure (38),
chaque extrémité (40e) de la couche extérieure (40) est située axialement à l'intérieur d'une extrémité (38e) de la couche intérieure (38),
une fente circonférentielle (50) est formée sur la portion en relief d'épaulement (52s) de manière à s'étendre en continu dans la direction circonférentielle,
une largeur de rainure (WGc) de la fente circonférentielle (50) est inférieure à une largeur de manière (w) de la rainure principale circonférentielle d'épaulement (48s),
la fente circonférentielle (50) est située entre la rainure principale circonférentielle d'épaulement (48s) et l'extrémité (40e) de la couche extérieure (40) dans la direction axiale,
un rapport (DX/DY) d'une distance (DX) dans la direction axiale depuis la rainure principale circonférentielle d'épaulement (48s) jusqu'à la fente circonférentielle (50) sur une distance (DY) dans la direction axiale depuis la rainure principale circonférentielle d'épaulement (48s) jusqu'à l'extrémité (40e) de la couche extérieure (40) n'est pas inférieur à 10 % et n'est pas supérieur à 95 %, et
la bande de roulement (4) inclut une portion de chape (28) configurée pour venir en contact avec la surface routière et une portion de base (30) située radialement à l'intérieur de la portion de chape (28),
**caractérisé en ce que**
une tangente de perte (LTb) de la portion de base (30) à 30 °C est inférieure à une tangente de perte (LTc) de la portion de chape (28) à 30 °C, la tangente de perte à 30 °C étant mesurée selon les standards de la norme industrielle japonaise JIS K6394 dans les conditions suivantes : contrainte initiale = 10 %, distorsion dynamique = ± 1 %, fréquence = 10 Hz et mode d'étirement, et
chaque extrémité (30e) de la portion de base (30) est située axialement à l'intérieur de l'extrémité (38e) de la couche intérieure (38).

2. Pneumatique (2) selon la revendication 1, dans lequel la largeur de rainure (WGc) de la fente circonférentielle (50) n'est pas inférieure à 0,8 mm et est inférieure à 1,5 mm.

3. Pneumatique (2) selon la revendication 1 ou 2, dans lequel un fond de rainure (50T) de la fente circonférentielle (50) est situé radialement à l'extérieur d'une frontière la portion de chape (28) et la portion de base (30).

4. Pneumatique (2) selon la revendication 3, dans lequel un rapport (α/β) d'une profondeur de rainure (α) de la fente circonférentielle (50) sur une épaisseur (β) de la portion de chape (28) n'est pas inférieur à 40 % et n'est pas supérieur à 95 %.

5. Pneumatique (2) selon l'une quelconque des revendications 1 à 4, dans lequel un rapport (WB/WS) d'une largeur (WB) dans la direction axiale de la portion de base (30) sur une largeur (WS) dans la direction axiale de la couche extérieure (40) n'est pas inférieur à 95 % et n'est pas supérieur à 105 %.

6. Pneumatique (2) selon l'une quelconque des revendications 1 à 5, dans lequel la fente circonférentielle (50) s'étend en zigzag dans chacune d'une direction de la longueur et d'une direction de la profondeur de celle-ci.
